# EUROPÄISCHE PATENTSCHRIFT

(11) **EP 3 400 155 B1**
(45) Veröffentlichungstag und Bekanntmachung des Hinweises auf die Patenterteilung: **01.07.2020**
(21) Anmeldenummer: 16819083.3
(22) Anmeldetag: 21.12.2016
(51) Int. Cl.: B60T 17/00

(54) **GERÄUSCHDÄMPFER FÜR EIN DRUCKLUFTSYSTEM EINES FAHRZEUGS, INSBESONDERE EINES NUTZFAHRZEUGS**
NOISE DAMPER FOR A COMPRESSED AIR SYSTEM OF A VEHICLE, IN PARTICULAR A UTILITY VEHICLE
AMORTISSEUR DE BRUIT POUR SYSTÈME À AIR COMPRIMÉ DE VÉHICULE, EN PARTICULIER DE VÉHICULE UTILITAIRE

(30) Priorität: 05.01.2016 DE 102016100140
(43) Veröffentlichungstag der Anmeldung: 14.11.2018
(73) Patentinhaber: KNORR-BREMSE Systeme für Nutzfahrzeuge GmbH, 80809 München (DE)
(72) Erfinder: AYDEMIR, Isa, 81249 München (DE)
(86) Internationale Anmeldenummer: PCT/EP2016/082178
(87) Internationale Veröffentlichungsnummer: WO 2017/118577

(56) Entgegenhaltungen:
- EP-A1- 0 019 855
- EP-A2- 0 359 948
- WO-A2-2009/152884
- DE-A1-102006 020 334
- DE-A1-102009 052 884
- US-A- 1 395 920
- US-A- 1 821 688
- US-A- 1 891 170

## Beschreibung

Die vorliegende Erfindung betrifft einen Geräuschdämpfer für ein Druckluftsystem eines Fahrzeugs, insbesondere eines Nutzfahrzeugs.

Aus dem Stand der Technik sind bereits Geräuschdämpfer für Druckluftsysteme von Fahrzeugen, insbesondere Nutzfahrzeugen bekannt, die ein Gehäuse und ein Dämmmittel umfassen. Das Gehäuse weist einen Lufteinlass und einen Luftauslass auf und das Dämmmittel wird innerhalb des Gehäuses angeordnet.

Derartige Geräuschdämpfer werden insbesondere zur Geräuschdämmung von Luftaufbereitungssystemen für das Bremssystem eines Nutzfahrzeugs, wie eines Lkw, verwendet.

Die Geräuschdämpfung wird insbesondere dadurch erzielt, dass die Luft vom Lufteinlass durch das Dämmmittel zum Luftauslass durchströmt wird.

Diese Geräuschdämpfer eignen sich insbesondere für einen Anwendungsfall, bei dem die Geräusche in Druckluftsystemen, die beim Entlüften des Druckluftsystems entstehen, reduziert werden können.

Derartige Geräuschdämpfer sind insbesondere aus der EP 0 565 136 A2, der EP 0 596 220 B1 und der DE 10 2009 052 884 A1 bekannt.

Des Weiteren ist aus der WO 2008/138465 A2 ein Schalldämpfer zum Dämpfen des Ausströmgeräusches von Druckluft aus Druckluftgeräten von Nutzfahrzeugen bekannt, die ein spiralförmiges angeordnetes Filtergestrick im Inneren des Schalldämpfers aufweisen.

Aus der EP 0 132 696 A2 ist ein Geräuschdämpfer für Ventilanordnungen in Druckluftanlagen von Nutzfahrzeugen bekannt, der unterhalb eines Schallschutzeinsatzes eine Struktur mit Leitrippen aufweist, die zum Luftauslass führt.

Des Weiteren ist aus der WO 2009/152884 A2 ein Geräuschdämpfer für Druckluftsysteme von Fahrzeugen bekannt, der mehrere in den Innenraum hineinragende Stege zum Aufspannen eines Dämmmaterials aufweist.

Ein weiterer Geräuschdämpfer für Druckluftsysteme von Fahrzeugen ist aus der EP 0 019 855 A1 bekannt.

Des Weiteren offenbart die DE 29 04 529 A1 einen Geräuschdämpfer für Druckluftsysteme eines Fahrzeugs und die DE 19701361 einen Geräuschdämpfer für Ventilanordnungen in Druckluftanlagen für Nutzfahrzeuge, der einen Bypasskanal und einen Nebenauslass aufweist, über den Luft entweichen kann, wenn sich das Schallschutzmaterial zusetzt.

Weiter ist aus der WO 2013/026763 A1 eine Schalldämpfungseinrichtung für eine Lufttrocknungsanlage eines Luftdruckversorgungssystems für ein Nutzfahrzeug offenbart, wobei ein Heizstab im Inneren der Schalldämpfungseinrichtung vorgesehen ist, um ein Zufrieren und Verstopfen durch gefrorenes Kondensatz des Schalldämpfers zu verhindern.

Bei den bislang bekannten Geräuschdämpfern besteht auch die Gefahr sogenannter Toträume. Diese Toträume im Dämmmittel werden durch die Luft nicht durchströmt. Dadurch wird der Wirkungsgrad der Geräuschdämpfung stark verringert.

Des Weiteren ist bei einer Druckluftentlüftungseinrichtung nicht auszuschließen, dass nach längerer Betriebszeit die Druckluft-Durchlässigkeit der geräuschdämpfenden Mittel im Gehäuseinneren, wie z.B. Gewirk oder ähnliches nachlässt, beispielsweise durch Gefrieren des Kondensats oder Ölkohleablagerungen. Dies kann zu einem höheren Staudruck im Inneren des Geräuschdämpfers führen.

Es ist daher die Aufgabe der vorliegenden Erfindung, einen Geräuschdämpfer der eingangs genannten Art in vorteilhafter Weise weiterzubilden, insbesondere dahingehend, dass dieser bei geringeren Kosten eine größere Robustheit gegen Schädigungen durch Verstopfung des Dämmmaterials aufweist.

Diese Aufgabe wird erfindungsgemäß gelöst durch einen Geräuschdämpfer mit den Merkmalen des Anspruchs 1. Danach ist vorgesehen, dass ein Geräuschdämpfer für ein Druckluftsystem eines Fahrzeugs, insbesondere eines Nutzfahrzeugs bereitgestellt wird, wobei der Geräuschdämpfer ein Gehäuse, wenigstens einen Lufteinlass und wenigstens einen Luftauslass sowie eine im Gehäuse angeordnete labyrinthartige Dämmstruktur aufweist.

Die Erfindung basiert auf dem Grundgedanken, dass das im Inneren des Gehäuses angeordnetes Dämmmaterial bzw. die Luftführung dergestalt ist, dass der Geräuschdämpfer im Wesentlichen totraumfrei ist. Durch keine bis geringfügige Verwendung von Dämmmitteln muss die durch den Geräuschdämpfer strömende Luft einen längeren Strömungsweg auf sich nehmen, der durch mehrere Umlenkungen erreicht wird. Die Umlenkungen erfolgen insbesondere durch die im Gehäuse angeordnete labyrinthartige Dämmstruktur. Durch eine derartige Struktur kann eine sehr homogene Durchströmung des Geräuschdämpfers sichergestellt werden, die den Totraum-Anteil minimiert und die Dämmleistung pro eingesetztem Dämmmaterial maximiert. Gleichzeitig ist ein geringerer Dämmmittel-Anteil möglich, was den Geräuschdämpfer im Vergleich zu den bislang bekannten Ansätzen deutlich kostengünstiger macht.

Des Weiteren kann vorgesehen sein, dass der Lufteinlass axial und der Luftauslass radial bezogen auf die Längsachse des Gehäuses angeordnet sind. Dadurch wird es möglich, eine Durchströmung des Geräuschdämpfers mit Luft durch zunächst einen axial angeordneten Auslass durch die Mitte des Schalldämpfers des Geräuschdämpfers zu gewährleisten, wobei danach die eingeströmte Druckluft radial nach außen durch das Labyrinth abströmen muss. Hierdurch erfolgt bereits automatisch die erste Umlenkung, die einen längeren Strömungsweg zur Folge hat und zu einer Verlangsamung der Strömungsgeschwindigkeit des den Geräuschdämpfers durchströmenden Fluids, insbesondere der den Geräuschdämpfer durchströmenden Druckluft ermöglicht.

Das Gehäuse kann zweiteilig mit wenigstens einem Gehäuseoberteil und mit wenigstens einem Gehäuseunterteil ausgebildet sein. Hierdurch wird es möglich, den Geräuschdämpfer insgesamt einfach fertigen zu können. Diese Gestaltung des Geräuschdämpfers ermöglicht es ebenfalls, einfach im Gehäuse eine labyrinthartige Dämmstruktur anordnen zu können.

Es kann vorgesehen sein, dass das Gehäuseoberteil wenigstens eine im Wesentlichen vollständig radial umlaufende Gehäuseoberteilrippe aufweist und dass das Gehäuseunterteil wenigstens eine im Wesentlichen vollständig umlaufende Gehäuseunterteilrippe aufweist. Diese Gehäuseteilrippen im Gehäuseoberteil bzw. Gehäuseunterteil ermöglichen ebenfalls eine Umlenkung des den Geräuschdämpfer durchströmenden Fluids, insbesondere der den Geräuschdämpfer durchströmenden Druckluft und dienen ebenfalls zur Verlangsamung der Strömungsgeschwindigkeit dieses Fluids bzw. der Druckluft. Die Gehäuseoberteilrippe und die Gehäuseunterteilrippe nehmen somit an der Schalldämpfung teil und können wesentlicher Bestandteil der labyrinthartigen Dämmstruktur sein.

Insbesondere kann vorgesehen sein, dass die Gehäuseoberteilrippe und die Gehäuseunterteilrippe radial zueinander versetzt angeordnet sind. Denkbar ist insbesondere, dass die Gehäuseoberteilrippe und die Gehäuseunterteilrippe ineinander eingreifen. Insbesondere wird es dadurch möglich, dass durch bloßes Ineinandersetzen des Gehäuseoberteils mit dem Gehäuseunterteil durch die ineinanderragenden Gehäuseoberteilrippen eine labyrinthartige Dämmstruktur ausgebildet wird, wobei der Luftstrom zwischen den Gehäuseoberteilrippen zickzackförmig geführt wird. Dies führt zu einer einfach zu realisierenden Umlenkung der durchströmenden Fluide bzw. der durchströmenden Druckluft, da ein längerer Strömungsweg mit sehr vielen Umlenkungen gewährleistet wird. Dies führt zu einer deutlichen Absenkung der Strömungsgeschwindigkeit. Ferner wird es durch eine derartige Struktur möglich, den Querschnitt des Strömungswegs zu reduzieren, wodurch das Fluid weniger bis gar keine Toträume vorfindet, die ungenutzt bleiben. Der Strömungsweg wird weiter sehr homogen durchströmt.

Insbesondere kann vorgesehen sein, dass die Gehäuseoberteilrippe und die Gehäuseunterteilrippe im Wesentlichen die labyrinthartige Dämmstruktur ausbilden.

Des Weiteren kann vorgesehen sein, dass das Gehäuseoberteil und das Gehäuseunterteil ineinandergreifen.

Insbesondere ist in diesem Zusammenhang denkbar, dass zwischen zwei Gehäuseunterteilrippen eine Gehäuseoberteilrippe eingreift bzw. zwischen zwei Gehäuseoberteilrippen eine Gehäuseunterteilrippe eingreift.

Darüber hinaus kann vorgesehen sein, dass eine Überdruckventileinheit vorgesehen ist. Mit einer derartigen Überdruckventileinheit kann sichergestellt werden, dass bei einem Zusetzen des Geräuschdämpfers und bei einem Erreichen eines zu hohen Staudrucks, ein etwaig entstehender Überdruck im Geräuschdämpfer über die Überdruckventileinheit abgeführt werden kann. Insbesondere ist denkbar, dass die Überdruckventileinheit zerstörungsfrei und reversibel arbeitet.

Des Weiteren kann vorgesehen sein, dass einlassseitig ein Einströmraum vorgesehen ist und dass die Überdruckventileinheit, der Lufteinlass und die labyrinthartige Dämmstruktur mit dem Einströmraum verbunden sind. Hierdurch kann eine kompakte Bauform und einfach zu realisierende Struktur des Geräuschdämpfers realisiert werden.

Es kann vorgesehen sein, dass im Inneren des Geräuschdämpfers Dämmmittel angeordnet ist.

Das Dämmmittel kann hier vor einer Durchmessererweiterung, z.B. einem Zwischenkanal im Inneren des Geräuschdämpfers, an das dem Inneren des Geräuchsdämpfers zugewandte Ende mit der Eingangsnennweite des Lufteinlasses angepresst sein.

Die durch den Lufteinlass einströmende Luft tritt daher direkt in das Dämmmittel ein, und zwar noch bevor es in den Zwischenkanal einströmt.

Weitere Einzelheiten und Vorteile der Erfindung sollen nun anhand eines in den Zeichnungen dargestellten Ausführungsbeispiels näher erläutert werden.

Es zeigen:
- Fig. 1: einen Geräuschdämpfer in schematischer Schnittdarstellung in einem ersten Ausführungsbeispiel;
- Fig. 2: einen Geräuschdämpfer in schematischer Schnittdarstellung in einem zweiten Ausführungsbeispiel;
- Fig. 3: einen Geräuschdämpfer in schematischer Schnittdarstellung in einem dritten Ausführungsbeispiel;
- Fig. 4: einen Geräuschdämpfer in schematischer Schnittdarstellung in einem vierten Ausführungsbeispiel;
- Fig. 5: einen Geräuschdämpfer in schematischer Schnittdarstellung in einem fünften Ausführungsbeispiel;
- Fig. 6: einen Geräuschdämpfer in schematischer Schnittdarstellung in einem sechsten Ausführungsbeispiel; und
- Fig. 7: einen Geräuschdämpfer in schematischer Schnittdarstellung in einem siebten Ausführungsbeispiel;

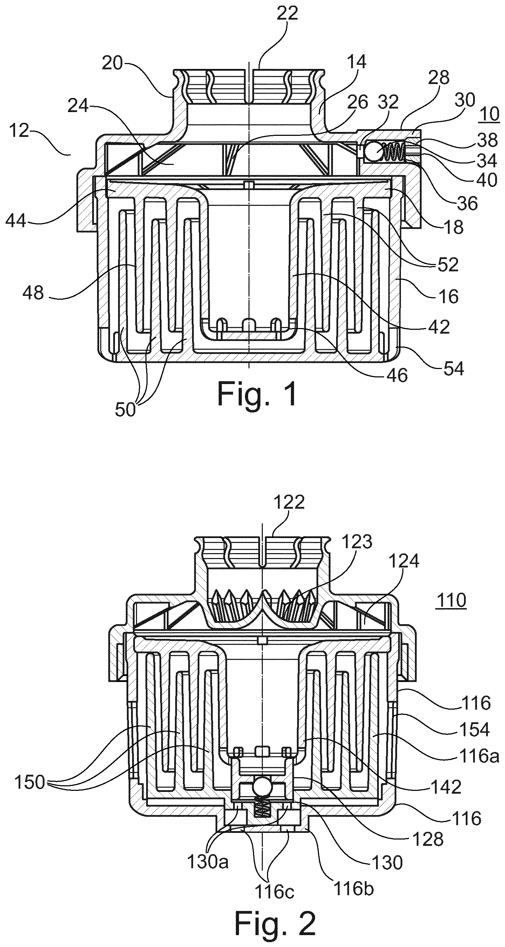

**Fig. 1** zeigt in schematischer Schnittdarstellung ein erstes erfindungsgemäßes Ausführungsbeispiel eines Geräuschdämpfers 10 für ein Druckluftsystem eines Fahrzeugs, hier eines Nutzfahrzeugs.

Der Geräuschdämpfer 10 ist ein Geräuschdämpfer, der im Zusammenhang mit der Luftaufbereitungsanlage einer pneumatischen Bremsanlage eines Nutzfahrzeugs eingesetzt wird.

Der Geräuschdämpfer 10 weist ein mehrteiliges Gehäuse 12 auf, dass aus einem Gehäusedeckel 14, einem Gehäuseaußentopf 16 und einem Gehäuseeinsatz 18, der ein Gehäuseoberteil 18 ausbildet, besteht.

Der Gehäusedeckel 14 weist an seinem einen Ende einen Ansatzstutzen 20 auf, in dem der Lufteinlass 22 des Geräuschdämpfers 10 angeordnet ist.

Der Lufteinlass 22 führt zu einer Durchmesserverbreiterung im Gehäusedeckel 14, wobei die Durchmesserverbreiterung in Kombination mit dem Gehäuseoberteil 18 einen Einströmraum 24 ausbildet.

Im Einströmraum 24 sind mehrere Leitrippen 26 vorgesehen.

Des Weiteren ist im Bereich des Einströmraums 24 radial außenliegend eine Überdruckventileinheit 28 vorgesehen.

Die Überdruckventileinheit 28 besteht aus einer Gehäuseaufnahme 30, in der eine Überdruckventilöffnung 32 vorgesehen ist, die direkt an den Einströmraum 24 angeschlossen ist.

Die Überdruckventileinrichtung 32 wird von einer federbelasteten Kugel 34, die durch eine Feder 36 federbelastet ist, im normalen Betriebszustand (wie in Fig. 1 gezeigt) verschlossen. Die Gehäuseaufnahme 30 wiederum weist zur Außenseite des Gehäusedeckels 14 hin einen Einsatz 38 auf, in dem die Überdruckventilauslassöffnung 40 ausgebildet ist.

Der Einsatz 38 ist in die Gehäuseaufnahme 30 eingesetzt, um den Durchmesser der Überdruckventilauslassöffnung 40 entsprechend zu definieren.

Das Gehäuseoberteil 18 befindet sich im montierten Zustand des Geräuschdämpfers 10 in dem Innenraum, der durch den Gehäusedeckel 14 und den Gehäuseaußentopf 16 ausgebildet wird.

Das Gehäuseoberteil 18 weist auf seiner dem Gehäusedeckel 14 zugewandten Seite eine trichterförmige Struktur auf, nämlich einen becherförmigen Ansatz 42, der eine Art Zwischenkanal ausbildet. Auf der im montierten Zustand des Geräuschdämpfers 10 dem Lufteinlass 22 zugewandten Seite ist ferner ein Kragen 44 vorgesehen, der sich radial nach außen vom Zwischenkanal 42 her erstreckt. Der Kragen 44 ist dabei bis an die Innenseite der Wand des Gehäuseaußentopfs 16 gezogen.

Auf der dem Kragen 44 abgewandten Seite des Zwischenkanals 42 ist endseitig des Zwischenkanals 42 eine Vielzahl von Luftaustrittsöffnungen 46 vorgesehen.

Diese Luftaustrittsöffnungen 46 verbinden den Zwischenkanal 42 mit der labyrinthartigen Dämmstruktur 48.

Die labyrinthartige Dämmstruktur 48 wird ausgebildet zum einen durch die Außenseite des Zwischenkanals 42 des Gehäuseoberteils 18, mehrere parallel zu dieser Außenwand aufragende Gehäuseunterteilrippen 50 sowie ebenfalls paralle zur Außenwand des Zwischenkanals 42 und versetzt zu den Gehäuseunterteilrippen 50 verlaufende Gehäuseoberteilrippen 52.

Die Gehäuseoberteilrippen 52 und die Gehäuseunterteilrippen 50 sind radial zueinander versetzt angeordnet und greifen ineinander ein, so dass Gehäuseoberteil 18 und Gehäuseunterteil ineinander eingreifen.

Der Strömungsweg von den Öffnungen 46 durch die Gehäuseunterteilrippen 50 und die Gehäuseoberteilrippen 52 verläuft somit zickzackförmig und mit mehreren Umlenkungen.

Radial außenliegend am Gehäuseaußentopf 16 sind an dem Ende des Gehäuseaußentopfs 16, das dem Gehäusedeckel 14 abgewandt ist, die Luftauslässe 54 des Geräuschdämpfers 10 vorgesehen.

Der Geräuschdämpfer 10 weist somit einen axialen Lufteinlass 22 und eine radialen Luftauslass 54 bezogen auf die Längsachse des Gehäuses 12 des Geräuschdämpfers 10 auf.

Zwischen den Gehäuseoberteilrippen 52 und Gehäuseunterteilrippen 50 kann Dämmmaterial vorgesehen sein. Zusätzlich kann Dämmmaterial in den becherförmigen Ansatz 42 vorgesehen werden. Dies ist jedoch nicht zwingend erforderlich.

Die Funktion des Geräuschdämpfers 10 lässt sich wie folgt beschreiben:
Über den Lufteinlass 22 tritt Luft in den Geräuschdämpfer 10 ein und strömt zunächst in den Einströmraum 24, wo es mittels der Leitrippen 26 und des Kragens 44 des Gehäuseoberteils 18 hin zum Zwischenkanal 42 geleitet wird. Dort strömt die Luft über die Öffnungen 46 in die labyrinthartige Dämmstruktur 48 und wird dort mehrfach mittels der Gehäuseoberteilrippen 52 und der Gehäuseunterteilrippen 50 umgeleitet, bis es zu den Luftauslässen 54 gelangt.

Durch die mehrfache Umlenkung wird die Strömungsgeschwindigkeit der durch die labyrinthartige Dämmstruktur 48 geführten Luft deutlich verringert, weshalb es zu einer Schalldämpfung kommt. Hierdurch kommt es zu einer Geräuschreduzierung.

In einem Fall, in dem aufgrund beispielsweise von gefrorener Kondensatbildung oder Rückständen von Ölkohlerückständen im Strömungsweg zwischen Lufteinlass 22 und den Luftauslässen 54 zumindest teilweise Verstopfungen vorliegen, kann ein Überdruck über die Überdruckventileinheit 28 abgebaut werden, ohne dass hierzu eine ireversible Veränderung der Überdruckventileinheit 28 erfolgt. Der Staudruck, der erreicht werden muss, kann hier insbesondere über die Feder 36 eingestellt werden. Ist der anliegende Staudruck derart groß, dass die Kugel 34 gegen die Feder 36 zurückgedrückt wird, wird die Öffnung 32 geöffnet und die Druckluft kann über die Überdruckventilöffnung 32 und den Auslass 40 entweichen.

Das in Fig. 1 gezeigte Ausführungsbeispiel ist somit ein Geräuschdämpfer 10 mit zwangsgeleiteter Luftführung durch die labyrinthartige Dämmstruktur 48 mit zusätzlichem Dämmmaterial und einer seitlich (radial) angeordneten Überdruckventileinheit 28.

**Fig. 2** zeigt ein zweites erfindungsgemäßes Ausführungsbeispiel eines Geräuschdämpfers 110.

Der Geräuschdämpfer 110 weist dabei im Wesentlichen sämtliche strukturellen und funktionalen Merkmale auf, wie dies bei dem vorstehend in Zusammenhang mit dem in Fig. 1 beschriebenen Geräuschdämpfer 10 der Fall ist.

Jedoch bestehen die folgenden Unterschiede, die nachstehend kurz erläutert werden sollen:
Der in Fig. 2 gezeigte Geräuschdämpfer 110 ist ein Geräuschdämpfer 110 mit zwangsgeleiteter Luftführung mit oder ohne Dämmmaterial und ohne eine Überdruckventileinheit, die an den Einströmraum angeschlossen ist.

Stattdessen ist die Überdruckventileinheit 128 am dem Lufteinlass entgegengesetzten Ende des Zwischenkanals 142 angeordnet.

Des Weiteren ist das Gehäuseunterteil 116a, das die Gehäuseunterteilrippen 150 aufweist, nicht integraler Bestandteil des Gehäusetopfs 116, sondern als gesondertes Bauteil ausgeführt. Die Führung 130 für die Überdruckventileinheit 128 ist dabei in dem Gehäuseunterteil 116a ausgebildet.

Der Gehäusetopf 116 weist auf seiner radialen Außenfläche mehrere Luftauslässe 154 mit vergleichsweise großem Querschnitt bzw. Durchmesser, insbesondere im Vergleich zu den Luftauslässen 154, auf.

Der Gehäuseaußentopf 116 weist weiter in seinem unteren Bereich eine Führung 116b für die Aufnahme 130 auf.

In diesem Bereich sind sowohl in der Aufnahme 130 als auch in der Führung 116b Überdruckluftauslassöffnungen 130a und 116c vorgesehen.

Im Bereich des Lufteinlasses 122 ist im Anschluss an den Lufteinlass 122 und dem Übergang zum Einströmraum 124 ein Grobsieb 123 vorgesehen, durch das die durch den Lufteinlass 122 einströmende Luft, die weiter zum Einströmraum 124 strömt, zunächst hindurchtreten muss.

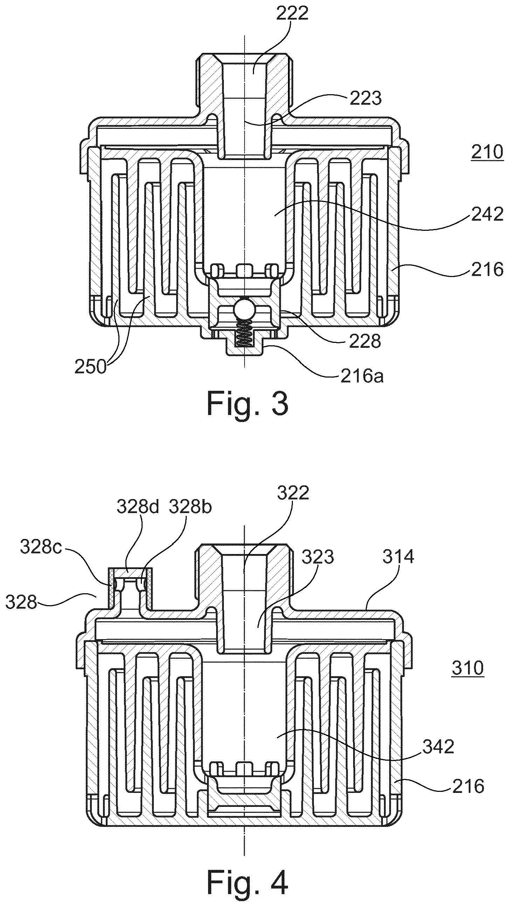

**Fig. 3** zeigt in schematischer Schnittdarstellung ein weiteres erfindungsgemäßes Ausführungsbeispiel eines Geräuschdämpfers 210, das vergleichbar mit dem in Fig. 2 gezeigten Geräuschdämpfers 110 aufgebaut ist, insbesondere im Zusammenhang mit der Ausgestaltung der Überdruckventileinheit 228.

Der Geräuschdämpfer 210 ist ein Geräuschdämpfer 210 mit zwangsgeleiteter Luftführung mit oder ohne Dämmmaterial und einer mittig angeordneten Überdruckventileinheit 228.

Der Geräuschdämpfer 210 weist im Wesentlichen sämtliche strukturellen und funktionalen Merkmale auf, wie die in Fig. 1 und 2 gezeigten Geräuschdämpfer. Jedoch bestehen insbesondere die folgenden Unterschiede:
Im Gegensatz zu dem in Fig. 2 gezeigten Geräuschdämpfer 110 weist der Geräuschdämpfer 210 kein gesondertes Gehäuseunterteil auf, denn hier sind wie bei dem in Fig. 1 gezeigten Ausführungsbeispiel die Gehäuseunterteilrippen 250 im Gehäusetopf 216 angeordnet.

Der Gehäusetopf 216 ist dabei im Wesentlichen identisch wie der Gehäusetopf 16 gemäß Ausführungsbeispiel wie nach Fig. 1 ausgebildet, jedoch mit dem Unterschied, dass hier eine Führung 216a vorgesehen ist, in der die Überdruckventileinheit 228 geführt wird.

Des Weiteren ist hier im Bereich des Lufteinlasses 222 eine düsenartige Struktur 223 vorgesehen, die dazu dient, den einströmenden Luftstrom über den Lufteinlass 222 direkt in den Zwischenkanal 242 zu leiten.

**Fig. 4** zeigt in schematischer Schnittdarstellung eine weitere erfindungsgemäße Ausführungsform eines Geräuschdämpfers 310.

Der Geräuschdämpfer 310 ist ebenfalls ein Geräuschdämpfer 310 mit zwangsgeleiteter Luftführung mit oder ohne Dämmmaterial und hier mit einer seitlich angeordneten Überdruckventileinheit 328.

Die Überdruckventileinheit 328 ist hier am Gehäusedeckel 314 angeordnet und besteht aus einem Überdruckventilstutzen 328a, Austrittsöffnungen 328b sowie einem über dem Überdruckventilstutzen 328a angeordneten Gummimanschette 328c.

Ebenso wie das Ausführungsbeispiel Fig. 3 ist auch hier im Bereich des Einlasses 322 eine düsenartige Struktur 323 vorgesehen, die den Lufteinlass 322 derart mit dem Zwischenkanal 342 verbindet, dass das durch den Lufteinlass 322 einströmende Fluid, insbesondere Druckluft im Wesentlichen direkt in den Zwischenkanal 342 geleitet wird.

Das Ausführungsbeispiel gemäß Fig. 4 betreffend den Geräuschdämpfer 310 ist im Wesentlichen identisch aufgebaut in struktureller als auch funktionaler Hinsicht wie das Ausführungsbeispiel gemäß Fig. 3 betreffend den Geräuschdämpfer 210. Wesentliche Unterschiede bestehen lediglich im Zusammenhang mit der Überdruckventileinheit 328 und der Ausgestaltung des Gehäusetopfs 216, da dieser keine Führung 216a für eine mittig angeordnete Überdruckventileinheit aufweisen muss.

Die Funktion der Überdruckventileinheit 328 ist dergestalt, dass im Falle eines zu hohen Staudrucks die Gummimanschette 328c derart abhebt, dass über die Auslassöffnung 328b Luft entweichen kann und hierdurch der Überdruck reduziert werden kann.

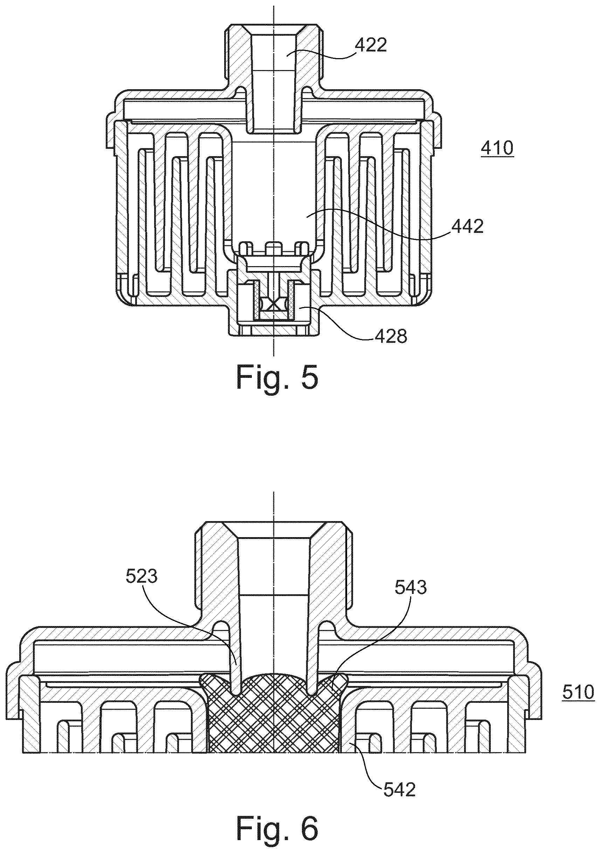

**Fig. 5** zeigt ebenfalls in schematischer Schnittdarstellung ein weiteres erfindungsgemäßes Ausführungsbeispiel eines Geräuschdämpfers 410.

Der Geräuschdämpfer 410 ist ein Geräuschdämpfer 410 mit zwangsgeleiteter Luftführung mit oder ohne Dämmmaterial und mit einer mittig angeordneten Überdruckventileinheit 428, die hinsichtlich ihrer Bauart und Wirkungsweise der Überdruckventileinheit 328 gemäß dem Ausführungsbeispiel nach Fig. 4 entspricht.

Der Unterschied des Geräuschdämpfers 410, der im Wesentlichen in seiner Funktion den Ausführungsbeispielen gemäß Fig. 3 und Fig. 4 entspricht, ist, dass die Überdruckventileinheit 428 nicht seitlich und im Gehäusedeckel angeordnet ist, wie bei dem Geräuschdämpfer 310 gemäß Fig. 4, sondern ebenso mittig, wie dies bei dem Ausführungsbeispiel gemäß Fig. 3 betreffend den Geräuschdämpfer 210 der Fall ist.

Die Überdruckventileinheit 428 ist somit an dem Ende des Zwischenkanal 442 angeordnet, dass dem Lufteinlass 422 entgegengesetzt ist.

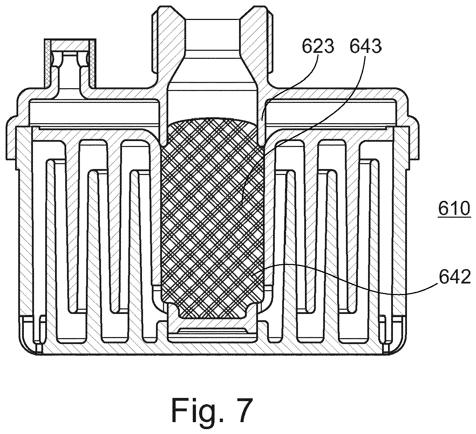

In den **Figuren 6** **und** **7** sind weitere Ausführungsbeispiele von Geräuschdämpfern 510 und 610 gezeigt, die grundsätzlich mit sämtlichen in den Figuren 1 bis 5 gezeigten Ausführungsformen realisiert werden können. Bei den Geräuschdämpfern 510 und 610 ist jeweils explizit gezeigt, wie im Zwischenkanal 542 bzw. 642 Dämmmittel 543 bzw. 643 angeordnet ist.

Bei der in Fig. 6 gezeigten Ausführungsform taucht die Düse 523 in das Dämmmittel 543 ein.

Das Dämmmaterial 543 ist hier vor der Durchmessererweiterung an das dem Inneren des Geräuchsdämpfers zugewandte Ende mit der Eingangsnennweite des Lufteinlasses angepresst.

Die durch den Lufteinlass einströmende Luft tritt daher direkt in das Dämmmittel 543 ein, und zwar noch bevor es in den Zwischenkanal einströmt.

Bei dem in Fig. 7 gezeigten Ausführungsbeispiel wird das Dämmmittel 643 durch den Außendurchmesser abgedichtet und auch hier taucht die Düse 623 in das Dämmmittel 643 ein.

Grundsätzlich kann vorgesehen sein, dass ein hoher Staudruck bei allen gezeigten Ausführungsformen dadurch verhindert wird, dass ein Überdruckventil in Form einer Kugel mit einer Feder oder als Nutring oder als Sombrero oder in Kombination ausgestaltet wird. Hierdurch wird verhindert, dass nach längerer Betriebszeit des Dämmmittels ein hoher Staudruck entsteht, wenn die Druckluftdurchlässigkeit des Dämmmittels nachlässt.

Bei allen Schalldämpferkonzepten ist es weiter möglich, dass direkt am ohnehin geringen Außendurchmesser des Gewirks radial abgedichtet wird und so dem Staudruck nur noch eine deutlich reduzierte Wirkfläche angeboten wird. Dies könnte in bestimmten Anwendungsfällen sogar dazu führen, dass ein zusätzliches Rückschlagventil bzw. eine Überdruckventileinheit überflüssig gemacht wird, wie dies beispielsweise in Fig. 6 gezeigt ist.

### BEZUGSZEICHENLISTE

- 10: Geräuschdämpfer
- 12: Gehäuse
- 14: Gehäusedeckel
- 16: Gehäuseaußentopf
- 18: Gehäuseeinsatz / Gehäuseoberteil
- 20: Ansatzstutzen
- 22: Lufteinlass
- 24: Einströmraum
- 26: Leitrippen
- 28: Überdruckventileinheit
- 30: Gehäuseaufnahme
- 32: Überdruckventilöffnung
- 34: Kugel
- 36: Feder
- 38: Einsatz
- 40: Überdruckventilauslassöffnung
- 42: becherförmiger Ansatz
- 44: Kragen
- 46: Luftaustrittsöffnungen
- 48: labyrinthartige Dämmstruktur
- 50: Gehäuseunterteilrippen
- 52: Gehäuseoberteilrippen
- 54: Luftauslässe

- 110: Geräuschdämpfer
- 116: Gehäusetopf
- 116a: Gehäuseunterteil
- 116b: Führung
- 116c: Überdruckluftauslassöffnungen
- 122: Lufteinlass
- 123: Grobsieb
- 124: Einströmraum
- 128: Überdruckventileinheit
- 130: Führung
- 130a: Überdruckluftauslassöffnungen
- 142: Zwischenkanal
- 150: Gehäuseunterteilrippen
- 154: Luftauslässe

- 210: Geräuschdämpfer
- 216: Gehäusetopf
- 216a: Führung
- 222: Lufteinlass
- 223: düsenartige Struktur
- 228: Überdruckventileinheit
- 242: Zwischenkanal
- 250: Gehäuseunterteilrippen

- 310: Geräuschdämpfer
- 314: Gehäusedeckel
- 322: Lufteinlass
- 323: düsenartige Struktur
- 328: Überdruckventileinheit
- 328a: Überdruckventilstutzen
- 328b: Austrittsöffnungen
- 328c: Gummimanschette
- 342: Zwischenkanal

- 410: Geräuschdämpfer
- 422: Lufteinlass
- 428: Überdruckventileinheit
- 442: Zwischenkanal

- 510: Geräuschdämpfer
- 523: Düse
- 542: Zwischenkanal
- 543: Dämmmittel

- 610: Geräuschdämpfer
- 623: Düse
- 642: Zwischenkanal
- 643: Dämmmittel

## Patentansprüche

1. Geräuschdämpfer (10) für ein Druckluftsystem eines Fahrzeugs, insbesondere Nutzfahrzeugs, mit einem Gehäuse (12), mit wenigstens einem Lufteinlass (22) und mit wenigstens einem Luftauslass (54) und mit einer im Gehäuse (12) angeordneten labyrinthartigen Dämmstruktur (48), wobei das Gehäuse (12) wenigstens zweiteilig mit wenigstens einem Gehäuseoberteil (18) und mit wenigstens einem Gehäuseunterteil ausgebildet ist, wobei das Gehäuseoberteil (18) wenigstens eine im Wesentlichen vollständig radial umlaufende Gehäuseoberteilrippe (52) aufweist und wobei das Gehäuseunterteil wenigstens eine im Wesentlichen vollständig radial umlaufende Gehäuseunterteilrippe (50) aufweist, wobei das Gehäuseoberteil (18) und das Gehäuseunterteil ineinandergreifen, so dass zwischen zwei Gehäuseunterteilrippen (50) eine Gehäuseoberteilrippe (52) eingreift und/oder zwischen zwei Gehäuseoberteilrippen (52) eine Gehäuseunterteilrippe (50) eingreift.

2. Geräuschdämpfer (10) nach Anspruch 1,
**dadurch gekennzeichnet, dass**
der Lufteinlass (22) axial und der Luftauslass (54) radial bezogen auf die Längsachse des Gehäuses (12) angeordnet sind.

3. Geräuschdämpfer (10) nach Anspruch 1,
**dadurch gekennzeichnet, dass**
die Gehäuseoberteilrippe (52) und die Gehäuseunterteilrippe (50) radial zueinander versetzt angeordnet sind.

4. Geräuschdämpfer (10) nach Anspruch 3,
**dadurch gekennzeichnet, dass**
die Gehäuseoberteilrippe (52) und die Gehäuseunterteilrippe (50) zumindest teilweise die labyrinthartige Dämmstruktur (48) ausbilden.

5. Geräuschdämpfer (10) nach einem der vorhergehenden Ansprüche,
**dadurch gekennzeichnet, dass**
eine Überdruckventileinheit (28) vorgesehen ist.

6. Geräuschdämpfer (10) nach Anspruch 5,
**dadurch gekennzeichnet, dass**
einlasseitig ein Einströmraum (24) vorgesehen ist und dass die Überdruckventileinheit (28), der Lufteinlass (22) und die labyrinthartige Dämmstruktur (48) mit dem Einströmraum (24) verbunden sind.

## Claims

1. Silencer (10) for a compressed air system of a vehicle, in particular a commercial vehicle, with a housing (12), with at least one air inlet (22) and with at least one air outlet (54) and with a labyrinth-like insulation structure (48) arranged in the housing (12), wherein the housing (12) is configured at least in two parts with at least one housing top part (18) and with at least one housing lower part, wherein the housing top part (18) has at least one substantially entirely radially encircling housing top part rib (52) and wherein the housing lower part has at least one substantially entirely radially encircling housing lower part rib (50), wherein the housing top part (18) and the housing lower part engage with each other, so that a housing top part rib (52) engages between two housing lower part ribs (50) and or a housing lower part rib (50) engages between two housing top part ribs (52).

2. Silencer according to claim 1,
**characterised in that**
the air inlet (22) is arranged axially and the air outlet (54) is arranged radially with respect to the longitudinal axis of the housing (12).

3. Silencer according to claim 1,
**characterised in that**
the housing top part rib (52) and the housing lower part rib (50) are arranged radially offset from each other.

4. Silencer according to claim 3,
**characterised in that**
the housing top part rib (52) and the housing lower part rib (50) form at least partly the labyrinth-like insulation structure (48).

5. Silencer according to any of the preceding claims.
**characterised in that**
a pressure relief valve unit (28) is provided.

6. Silencer according to claim 5,
**characterised in that**
an inflow space (24) is provided at the inlet side and **in that** the pressure relief valve unit (28), the air inlet (22) and the labyrinth-like insulation structure (48) are connected to the inflow space (24).

## Revendications

1. Amortisseur (10) de bruit d'un système à air comprimé d'un véhicule, notamment d'un véhicule utilitaire, comprenant un boîtier (12) ayant au moins une entrée (22) d'air et au moins une sortie (54) d'air et ayant une structure (48) de barrage de type en labyrinthe disposée dans le boîtier (12), le boîtier (12) étant constitué en au moins deux partie, en ayant au moins une partie (18) supérieure et au moins une partie inférieure, la partie (18) supérieure du boîtier ayant au moins une nervure (52) faisant le tour radialement sensiblement complètement et la partie inférieure du boîtier ayant une nervure (50) faisant le tour radialement sensiblement complètement, la partie (18) du boîtier et la partie inférieure du boîtier s'interpénétrant, de manière à ce qu'une nervure (52) du boîtier inférieur pénètre entre deux nervures (50) de la partie inférieure du boîtier et/ou de manière à ce qu'une nervure (50) de la partie inférieure du boîtier inférieur pénètre entre deux nervures (52) de la partie supérieure du boîtier.

2. Amortisseur (10) de bruit suivant la revendication 1,
**caractérisé en ce que**
l'entrée (22) d'air est disposée axialement et la sortie (54) d'air radialement par rapport à l'axe longitudinal du boîtier (22).

3. Amortisseur (10) de bruit suivant la revendication 1,
**caractérisé en ce que**
les nervures (52) de la partie supérieure du boîtier et les nervures (50) de la partie inférieure du boîtier sont décalées radialement les unes par rapport aux autres.

4. Amortisseur (10) de bruit suivant la revendication 3,
**caractérisé en ce que**
les nervures (52) de la partie supérieure du boîtier et les nervures (50) de la partie inférieure du boîtier constituent, au moins en partie, la structure (48) de barrage de type en labyrinthe.

5. Amortisseur (10) de bruit suivant l'une des revendications précédentes,
**caractérisé en ce qu'**
il est prévu une unité (28) de soupape de surpression.

6. Amortisseur (10) de bruit suivant la revendication 5,
**caractérisé en ce qu'**
il est prévu du côté de l'entrée un espace (24) d'entrée et **en ce que** l'unité (28) de soupape de surpression, l'entrée (22) d'air et la structure (48) de barrage de type en labyrinthe communiquent avec l'espace (24) d'entrée.
